# EUROPEAN PATENT SPECIFICATION

(11) **EP 2 238 024 B1**
(45) Date of publication and mention of the grant of the patent: **25.05.2011**
(21) Application number: 09706251.7
(22) Date of filing: 22.01.2009
(51) Int. Cl.: B64C 9/02

(54) **Aircraft structure with modified control device hinge line**
Flugzeugstruktur mit geänderter Scharnierachse einer Steuerungsvorrichtung
Structure d'avion présentant un axe d'articulation de dispositif de commande modifié

(30) Priority: 31.01.2008 GB 0801762
(43) Date of publication of application: 13.10.2010
(73) Proprietor: Airbus Operations Limited, Bristol BS99 7AR (GB)
(72) Inventor: HEATH, Robert James, Bristol BS99 7AR (GB)
(74) Representative: Ribeiro, James Michael
(86) International application number: PCT/GB2009/050055
(87) International publication number: WO 2009/095707

(56) References cited:
- WO-A-01/05654
- US-A- 2 549 760
- US-A- 3 594 851

## Description

### FIELD OF THE INVENTION

The present invention relates to an aircraft structure such as a wing, horizontal tail plane or vertical tail plane, incorporating a hinge assembly pivotally coupling a control device such as an aileron, elevator or rudder to a trailing edge of the structure.

### BACKGROUND OF THE INVENTION

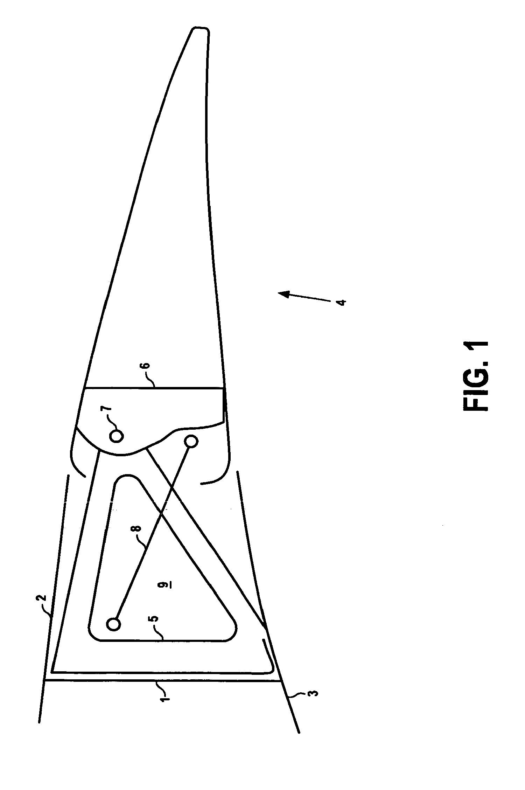

The trailing edge of a conventional aircraft wing is shown in Figure 1. The wing comprises a main wing element with a rear spar 1, upper cover 2 and lower cover 3. An aileron 4 is coupled to the rear spar 1 by a hinge assembly comprising a spar bracket 5 attached to the rear spar, and an aileron bracket 6 attached to the aileron spar and pivotally coupled to the spar bracket about a hinge line 7. A hydraulic actuator 8 expands and contracts to rotate the aileron about the hinge line 7.

The arrangement of Figure 1 limits the chord length available for the aileron. To obtain a control surface of sufficient size the aileron must be extended inboard and thus limits the span-wise extent of the flaps. Where high lift performance is the dominant design-driver the wing area may need to be increased, degrading the overall performance of the aircraft.

In addition, the spar bracket 5 is complex and bulky to install in the trailing edge (which is the smallest part of the wing) resulting in cost and weight penalties.

Furthermore, it is necessary to route cable and pipe runs through a closed gap 9 in the spar bracket 5. This can be difficult and time consuming.

WO01/05654 describes a control system for an aircraft comprising a trailing edge control surface mounted for pivotal movement about a control surface pivot axis fixed relative to the aircraft, and a control surface actuator connected between the aircraft and the control surface. The actuator is operable to pivotally move the control surface.

US2549760 describes an aircraft wing comprising a fixed portion, a rear flap and a front flap. The fixed portion comprises a recess in its upper surface for housing the front flap and a recess in its lower surface for housing the rear flap. A hydraulic operating gear is secured at one end to the fixed portion of the wing and at the other end by a pivot to one or more brackets which are coupled to the front and rear flaps.

US3594851 describes a hinge for connecting a control surface to an aircraft structure. Two sets of wing brackets are anchored to the wing spar and are joined by a reinforcing plate. Complementary pairs of control surface brackets are anchored to the control surface spar. Each pair of control surface brackets fits between each pair of wing brackets and are adapted to be interconnected therewith by a bolt.

### SUMMARY OF THE INVENTION

A first aspect of the invention provides an aircraft structure comprising: a main element comprising a rear spar; a control device comprising a control device spar; and a hinge assembly comprising: a spar bracket attached to the rear spar, and a control device bracket attached to the control device spar and pivotally coupled to the spar bracket about a hinge line; and an actuator pivotally coupled to the main element at a first pivot point and to the control device at a second pivot point, the length of the actuator between the pivot points being adjustable so as to rotate the control device in a first direction about the hinge line from a neutral position to a first deployed position, and in a second opposite direction about the hinge line from the neutral position to a second deployed position; wherein the hinge line is positioned closer to the rear spar than to the control device spar at least when the control device is in the neutral position.

By positioning the hinge line closer to the rear spar than to the control device spar, the chord length of the control device can be increased giving design freedom to take advantage of a more powerful control surface, decrease the angle of movement of the control device, decrease the span of the control device or a combination of these factors.

The control device may comprise an aileron, elevator, rudder, or any control device which has a neutral position and can be rotated either side of the neutral position. Typically the control device occupies the full depth of the aerodynamic cross-section of the structure, in contrast with control devices such as spoilers or air brakes which only occupy part of the depth.

The structure may comprise for example the main wing of the aircraft, the horizontal tail plane (also known as the horizontal stabilizer), or the vertical tail plane (also known as the vertical stabilizer).

The structure may further comprises a flexible line (such as a hydraulic pipe or electrical cable) which is fixed to the main element and extends in a span-wise direction along the structure. In this case, preferably the flexible line passes through a gap which is located outside the hinge assembly.

Preferably the control device further comprises upper and lower control device covers which are attached to the control device spar and overhang forward of the control device spar. In this case the control device bracket may comprise a continuous web which is attached to the control device spar and both covers. However such a continuous structure can be relatively heavy so more preferably the control device bracket comprises an upper bracket arm attached to the upper control device cover and a lower bracket arm attached to the lower control device cover.

Various other preferred features of the invention are described in the dependent claims.

### BRIEF DESCRIPTION OF THE DRAWINGS

Embodiments of the invention will now be described with reference to the accompanying drawings, in which:
Figure 1 is a schematic sectional view of a trailing edge of a conventional aircraft wing;
Figure 2 is a schematic sectional view of a trailing edge of an aircraft wing according to an embodiment of the present invention with the aileron in its neutral position; and
Figure 3 is an isometric schematic view of the aileron shown in section in Figure 2.

### DETAILED DESCRIPTION OF EMBODIMENT(S)

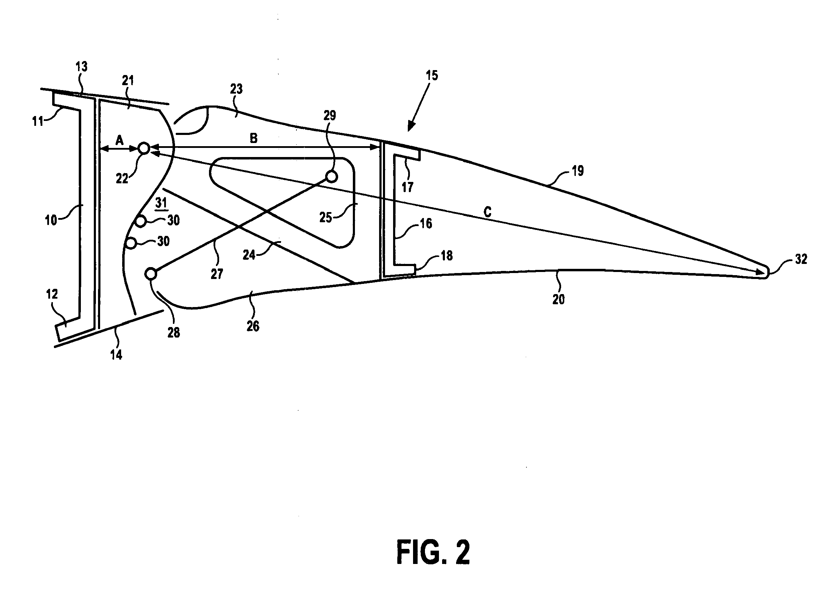

The trailing edge of an aircraft wing according to an embodiment of the present invention is shown in Figure 2.

The wing comprises a main wing element with a C-section rear spar, and upper and lower covers 13,14 which are attached to the rear spar and overhang to its rear. The rear spar comprises a web 10 extending between the upper and lower covers 13,14, and upper and lower flanges 11,12.

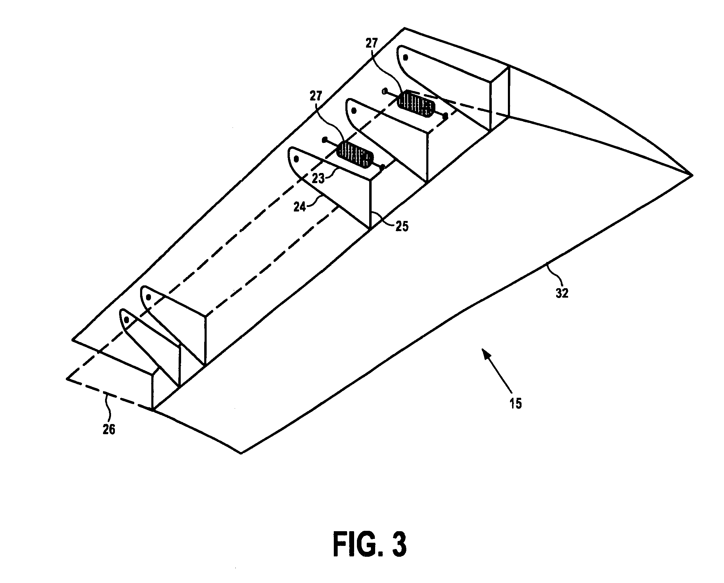

An aileron 15 shown in Figure 3 is pivotally attached to the rear spar. The aileron 15 comprises a C-section front spar 16-18, and upper and lower aileron covers 19,20 which are attached to the front spar and overhang to its front. The front spar comprises a web 16 extending between the upper and lower covers 19,20, and upper and lower flanges 17,18.

The aileron 15 is pivotally coupled to the rear spar by a hinge assembly comprising a spar bracket 21 and an aileron bracket 23-25. The spar bracket 21 is attached to the covers 13,14 and to the web 10 of the rear spar by fasteners (not shown). The aileron bracket 23-25 is attached to the aileron covers 19,20 and to the web 16 of the aileron spar by fasteners (not shown). The brackets are pivotally coupled together about a hinge line defined by a pivot pin 22.

The aileron bracket comprises an upper bracket arm 23 attached to the upper aileron cover 19 along the majority of its length, a lower bracket arm 24 attached to the lower aileron cover 20 at its foot only, and a strut 25 which is attached to the aileron spar web 16 by fasteners (not shown) and extends between the upper and lower bracket arms. The aileron bracket has a so-called "A-frame" structure with the arms 23,24 extending at an acute angle to each other and meeting at the hinge line. Note that the strut 25 may be omitted if necessary, and the distal ends of the arms 23 attached to the spar web 16 as well as a respective cover 19,20.

A panel 26 is attached to a leading edge of the lower aileron cover 20 by a butt strap or similar fastening arrangement (not shown). The panel 26 can be removed to provide access to the actuator 27 and the various other elements between the aileron and the rear spar.

A hydraulic linear actuator 27 is pivotally coupled to the main wing element by a first actuator hinge assembly (not shown) at a first pivot point 28 and to the aileron 15 by a second actuator hinge assembly (not shown) at a second pivot point 29. The length of the actuator 27 between the pivot points 28, 29 can be expanded or contracted so as to rotate the aileron about the hinge line 22 between a pair of upper and lower deployed positions on opposite sides of a neutral position shown in Figure 2. In the neutral position the aileron covers 19,20 are in line with the covers 13,14 of the main wing element. As shown in Figure 3, the aileron has five aileron hinge brackets, and two actuators 27 are provided to deploy the aileron.

Flexible electrical cables and hydraulic pipes 30 are fixed to the rear spar and extend in a span-wise direction along the wing through a gap 31 between the spar bracket 21 and the aileron bracket 23-25.. Assembly of the wing is simplified because the lines 30 can be attached directly to the main wing element before the aileron is installed. Furthermore, because the lines 30 pass through a gap 31 which is located outside the hinge assembly there is no need to feed them through a closed gap within the hinge assembly, as in the conventional arrangement of Figure 1.

Furthermore, in contrast with the conventional arrangement shown in Figure 1, in at least the neutral position shown in Figure 2, the hinge line 22 is positioned:
- closer to the web 10 of the rear spar than to the web 16 of the aileron spar. That is, the shortest distance between the hinge line 22 and the web 10 of the rear spar (as indicated by distance A in Figure 2) is less than the shortest distance between the hinge line 22 and the web 16 of the aileron spar (as indicated by distance B in Figure 2)
- forward of a point half way between the actuator pivot points 28,29
- closer to the first actuator pivot point 28 than to the second actuator pivot point 29.

By positioning the hinge line 22 further forward than in the conventional arrangement shown in Figure 1, the chord length of the aileron can be increased giving design freedom to take advantage of a more powerful surface for roll control or high lift, decrease the angle of movement as the aileron is deployed, decrease the span of the aileron or a combination of these factors.

The space available for the actuator is substantially unchanged from the conventional arrangement shown in Figure 1. However, the space occupied by the actuator is now part of the movable surface instead of the fixed structure. That is, at least a majority of the length of the actuator 27 is positioned within the chord length of the aileron.

Note that that in contrast to the conventional arrangement shown in Figure 1, the distance B between the hinge line and the aileron spar web 16 is greater than 25% of the distance C between the hinge line and a trailing edge 32 of the aileron. In this example distance B is approximately 38% of distance C. Note also that in contrast to the flaperon described in US 2007/0114328, a line between the hinge line 22 and the trailing edge 32 of the aileron passes through the aileron spar web 16.

Furthermore, in contrast to the conventional arrangement shown in Figure 1, the first actuator pivot point 28 is positioned lower than the second actuator pivot point 29, at least in the neutral position shown in Figure 2, in order to maximise the moment arm of the actuator.

Although the invention has been described above with reference to one or more preferred embodiments, it will be appreciated that various changes or modifications may be made without departing from the scope of the invention as defined in the appended claims.

## Claims

1. An aircraft structure comprising:
a main element comprising a rear spar (10, 11, 12),
a control device (15) comprising a control device spar (16, 17, 18), and
a hinge assembly comprising:
a spar bracket (21) attached to the rear spar (10,11,12), and
a control device bracket (23, 24, 25) attached to the control device spar (16, 17, 18) and pivotally coupled to the spar bracket (21) about a hinge line (22); and
an actuator (27) pivotally coupled to the main element at a first pivot point (28) and to the control device at a second pivot point (29), the length of the actuator (27) between the pivot points (28, 29) being adjustable so as to rotate the control device (15) in a first direction about the hinge line (22) from a neutral position to a first deployed position, and in a second opposite direction about the hinge line (22) from the neutral position to a second deployed position;
wherein the hinge line (22) is positioned closer to the rear spar (10, 11, 12) than to the control device spar (16, 17, 18) at least when the control device (15) is in the neutral position.

2. The structure of claim 1 further comprising a flexible line (30) which is fixed to the main element, and extends in a span-wise direction along the structure.

3. The structure of claim 2 wherein the flexible line (30) passes through a gap (31) which is located outside the hinge assembly.

4. The structure of any preceding claim wherein the hinge line (22) is positioned forward of a point half way between the pivot points (28, 29), in at least one position of the control device (15).

5. The structure of any preceding claim wherein the hinge line (22) is positioned closer to the first pivot point (28) than to the second pivot point (29), in at least one position of the control device (15).

6. The structure of any preceding claim wherein the control device (15) further comprises upper and lower control device covers (19, 20) which are attached to the control device spar (16, 17, 18) and overhang forward of the control device spar (16, 17, 18).

7. The structure of claim 6 wherein the control device bracket (23, 24, 25) comprises an upper bracket arm (23) attached to the upper control device cover (19) and a lower bracket arm (24) attached to the lower control device cover (20).

8. The structure of claim 7 wherein the control device bracket (23, 24, 25) further comprises a strut (25) which abuts the control device spar (16, 17, 18) and extends between the upper and lower bracket arms (23, 24).

9. The structure of any preceding claim wherein the main element further comprises upper and lower covers (13, 14); the rear spar (10, 11, 12) comprises a rear spar web (10) extending between the upper and lower covers (13, 14); the control device (15) further comprises upper and lower control device covers (19, 20); the control device spar (16, 17, 18) comprises a control device spar web (16) extending between the upper and lower control device covers (19, 20); and the hinge line (22) is positioned closer to the rear spar web (10) than to the control device spar web (16).

10. The structure of any preceding claim wherein the distance between the hinge line (22) and the control device spar (16, 17, 18) is greater than 25% of the distance between the hinge line (22) and a trailing edge (32) of the control device (25).

11. The structure of any preceding claim wherein a line between the hinge line (22) and a trailing edge (32) of the control device (15) passes through the control device spar (16, 17, 18).

12. The structure of any preceding claim wherein the control device (15) comprises an aileron.

13. The structure of any preceding claim wherein at least a majority of the length of the actuator (27) between the pivot points (28, 29) is positioned within the chord length of the control device (15).

14. The structure of any preceding claim wherein the control device (15) occupies the full depth of the aerodynamic cross-section of the structure.

## Patentansprüche

1. Flugzeugstruktur, enthaltend:
ein Hauptelement, das einen Hinterholm (10, 11, 12) umfasst,
eine Steuervorrichtung (15), enthaltend einen Steuervorrichtungsholm (16, 17, 18), und
eine Gelenkbaugruppe, enthaltend:
eine Holmhalterung (21), die am Hinterholm (10, 11, 12) angebracht ist, und
eine Steuervorrichtungshalterung (23, 24, 25), die am Steuervorrichtungsholm (16, 17, 18) angebracht ist und um eine Scharnierlinie (22) schwenkbar mit der Holmhalterung (21) verbunden ist, und
ein Betätigungselement (27), das an einem ersten Schwenkpunkt (28) schwenkbar mit dem Hauptelement und an einem zweiten Schwenkpunkt (29) mit der Steuervorrichtung verbunden ist, wobei die Länge des Betätigungselements (27) zwischen den Schwenkpunkten (28, 29) so einstellbar ist, dass die Steuervorrichtung (15) in einer ersten Richtung um die Scharnierlinie (22) aus einer Neutralposition in erste Einsatzposition und in einer zweiten, entgegengesetzten Richtung um die Scharnierlinie (22) aus der Neutralposition in zweite Einsatzposition geschwenkt wird,
wobei die Scharnierlinie (22) näher am Hinterholm (10, 11, 12) angeordnet ist als am Steuervorrichtungsholm (16, 17, 18), wenigstens wenn sich die Steuervorrichtung (15) in der neutralen Position befindet.

2. Struktur nach Anspruch 1, die darüber hinaus eine flexible Leitung (30) enthält, die am Hauptelement befestigt ist und sich in Holmrichtung entlang der Struktur erstreckt.

3. Struktur nach Anspruch 2, bei der die flexible Leitung (30) durch eine Lücke (31) verläuft, die sich außerhalb der Gelenkbaugruppe befindet.

4. Struktur nach einem der vorherigen Ansprüche, bei der die Scharnierlinie (22) in wenigstens einer Position der Steuervorrichtung (15) vor einem Punkt auf halbem Weg zwischen den Schwenkpunkten (28, 29) angeordnet ist.

5. Struktur nach einem der vorherigen Ansprüche, bei der die Scharnierlinie (22) wenigstens einer Position der Steuervorrichtung (15) näher am ersten Schwenkpunkt (28) als am zweiten Schwenkpunkt (29) angeordnet ist.

6. Struktur nach einem der vorherigen Ansprüche, bei der die Steuervorrichtung (15) darüber hinaus obere und untere Steuervorrichtungsabdeckungen (19, 20) enthält, die am Steuervorrichtungsholm (16, 17, 18) angebracht sind und den Steuervorrichtungsholm (16, 17, 18) nach vorne überragen.

7. Struktur nach Anspruch 6, bei der die Steuervorrichtungshalterung (23, 24, 25) einen an der oberen Steuervorrichtungsabdeckung (19) angebrachten oberen Halterungsarm (23) und einen an der unteren Steuervorrichtungsabdeckung (20) angebrachten unteren Halterungsarm (24) enthält.

8. Struktur nach Anspruch 7, bei der die Steuervorrichtungshalterung (23, 24, 25) darüber hinaus eine Strebe (25) enthält, die an den Steuervorrichtungsholm (16, 17, 18) grenzt und sich zwischen dem oberen und unteren Halterungsarm (23, 24) erstreckt.

9. Struktur nach einem der vorherigen Ansprüche, bei der das Hauptelement darüber hinaus obere und untere Abdeckungen (13, 14) enthält, der Hinterholm (10, 11, 12) einen sich zwischen den obere und untere Abdeckungen (13, 14) erstreckenden Hinterholmsteg (10) enthält, die Steuervorrichtung (15) darüber hinaus obere und untere Steuervorrichtungsabdeckungen (19, 20) enthält, der Steuervorrichtungsholm (16, 17, 18) einen sich zwischen den oberen und unteren Steuervorrichtungsabdeckungen (19, 20) erstreckenden Steuervorrichtungsholmsteg (16) enthält und die Scharnierlinie (22) näher am Hinterholmsteg (10) als am Steuervorrichtungsholmsteg (16) angeordnet ist.

10. Struktur nach einem der vorherigen Ansprüche, bei der der Abstand zwischen der Scharnierlinie (22) und dem Steuervorrichtungsholm (16, 17, 18) größer als 25 % des Abstands zwischen der Scharnierlinie (22) und der Hinterkante (32) der Steuervorrichtung (15) ist.

11. Struktur nach einem der vorherigen Ansprüche, bei der eine Linie zwischen der Scharnierlinie (22) und einer Hinterkante (32) der Steuervorrichtung (15) durch den Steuervorrichtungsholm (16, 17, 18) verläuft.

12. Struktur nach einem der vorherigen Ansprüche, bei der die Steuervorrichtung (15) ein Querruder umfasst.

13. Struktur nach einem der vorherigen Ansprüche, bei der wenigstens ein Großteil der Länge des Betätigungselements (27) zwischen den Schwenkpunkten (28, 29) innerhalb der Sehnenlänge der Steuervorrichtung (15) angeordnet ist.

14. Struktur nach einem der vorherigen Ansprüche, bei der die Steuervorrichtung (15) die volle Tiefe des aerodynamischen Querschnitts der Struktur einnimmt.

## Revendications

1. Structure d'aéronef, comprenant :
un élément principal comprenant un longeron arrière (10, 11, 12),
un dispositif de commande (15) comprenant un longeron de dispositif de commande (16, 17, 18), et
un ensemble d'articulation comprenant :
un support de longeron (21) fixé au longeron arrière (10, 11, 12), et
un support de dispositif de commande (23, 24, 25) fixé au longeron de dispositif de commande (16, 17, 18) et accouplé de façon pivotante avec le support de longeron (21) sur une ligne d'articulation (22) ; et
un actionneur (27) accouplé de façon pivotante avec l'élément principal à un premier point de pivotement (28) et avec le dispositif de commande à un second point de pivotement (29), la longueur de l'actionneur (27) entre les points de pivotement (28, 29) étant réglable afin de faire tourner le dispositif de commande (15) dans une première direction autour de la ligne d'articulation (22) d'une position neutre à une première position déployée, et dans une seconde direction opposée autour de la ligne d'articulation (22) de la position neutre à une seconde position déployée ;
dans laquelle la ligne d'articulation (22) est positionnée plus près du longeron arrière (10, 11, 12) que du longeron de dispositif de commande (16, 17, 18) au moins lorsque le dispositif de commande (15) est dans la position neutre.

2. Structure selon la revendication 1, comprenant en outre une ligne flexible (30) qui est fixée à l'élément principal, et s'étend dans un sens de l'envergure le long de la structure.

3. Structure selon la revendication 2, dans laquelle la ligne flexible (30) passe à travers un espace (31) qui se situe à l'extérieur de l'ensemble d'articulation.

4. Structure selon une quelconque revendication précédente, dans laquelle la ligne d'articulation (22) est positionnée vers l'avant d'un point à mi-chemin entre les points de pivotement (28, 29), dans au moins une position du dispositif de commande (15).

5. Structure selon une quelconque revendication précédente, dans laquelle la ligne d'articulation (22) est positionnée plus près du premier point de pivotement (28) que du second point de pivotement (29), dans au moins une position du dispositif de commande (15).

6. Structure selon une quelconque revendication précédente, dans laquelle le dispositif de commande (15) comprend en outre des revêtements de dispositif de commande supérieur et inférieur (19, 20) qui sont fixés au longeron de dispositif de commande (16, 17, 18) et sont en porte-à-faux vers l'avant du longeron de dispositif de commande (16, 17, 18).

7. Structure selon la revendication 6, dans laquelle le support de dispositif de commande (23, 24, 25) comprend un bras de support supérieur (23) fixé au revêtement de dispositif de commande supérieur (19) et un bras de support inférieur (24) fixé au revêtement de dispositif de commande inférieur (20).

8. Structure selon la revendication 7, dans laquelle le support de dispositif de commande (23, 24, 25) comprend en outre une jambe de force (25) qui prend appui sur le longeron de dispositif de commande (16, 17, 18) et s'étend entre les bras de support supérieur et inférieur (23, 24).

9. Structure selon une quelconque revendication précédente, dans laquelle l'élément principal comprend en outre des revêtements supérieur et inférieur (13, 14) ; le longeron arrière (10, 11, 12) comprend une âme de longeron arrière (10) s'étendant entre les revêtements supérieur et inférieur (13, 14) ; le dispositif de commande (15) comprend en outre des revêtements de dispositif de commande supérieur et inférieur (19, 20) ; le longeron de dispositif de commande (16, 17, 18) comprend une âme de longeron de dispositif de commande (16) s'étendant entre les revêtements de dispositif de commande supérieur et inférieur (19, 20) ; et la ligne d'articulation (22) est positionnée plus près de l'âme de longeron arrière (10) que de l'âme de longeron de dispositif de commande (16).

10. Structure selon une quelconque revendication précédente, dans laquelle la distance entre la ligne d'articulation (22) et le longeron de dispositif de commande (16, 17, 18) est supérieure à 25 % de la distance entre la ligne d'articulation (22) et un bord de fuite (32) du dispositif de commande (25).

11. Structure selon une quelconque revendication précédente, dans laquelle une ligne entre la ligne d'articulation (22) et un bord de fuite (32) du dispositif de commande (15) passe à travers le longeron de dispositif de commande (16, 17, 18).

12. Structure selon une quelconque revendication précédente, dans laquelle le dispositif de commande (15) comprend un aileron.

13. Structure selon une quelconque revendication précédente, dans laquelle au moins une majorité de la longueur de l'actionneur (27) entre les points de pivotement (28, 29) est positionnée à l'intérieur de la longueur de corde du dispositif de commande (15).

14. Structure selon une quelconque revendication précédente, dans laquelle le dispositif de commande (15) occupe la profondeur complète de la section transversale aérodynamique de la structure.
